# EUROPEAN PATENT APPLICATION

(11) **EP 4 755 669 A1**
(43) Date of publication of application: **10.06.2026**
(21) Application number: 24847738.2
(22) Date of filing: 30.05.2024
(51) Int. Cl.: B60G 17/015, B60G 17/08

(54) **VALVE BLOCK AND INTEGRATED VALVE FOR SUSPENSION SYSTEM, SUSPENSION SYSTEM AND VEHICLE**

(30) Priority: 31.07.2023 CN 202310968243
(71) Applicant: BYD Company Limited, Shenzhen, Guangdong 518118 (CN)
(72) Inventor: JIN, Xiaoguang, Shenzhen, Guangdong 518118 (CN); XU, Min, Shenzhen, Guangdong 518118 (CN); YE, Meijiao, Shenzhen, Guangdong 518118 (CN)
(74) Representative: Mathys & Squire
(86) International application number: PCT/CN2024/096333
(87) International publication number: WO 2025/025775

(57) **Abstract**

A valve block (1) and integrated valve (10) for a suspension system (100), a suspension system (100) and a vehicle (1000). The integrated valve (10) for the suspension system (100) comprises a valve block (1) and a control valve assembly (2), wherein a main flow path (11) and a plurality of branch flow paths (12) are provided in the valve block (1), first ends of the plurality of branch flow paths (12) all being connected to a first end of the main flow path (11), a second end of the main flow path (11) being adapted to be connected to a pump assembly (20), and second ends of the branch flow paths (12) being adapted to be connected to a shock absorber (30); and the control valve assembly (2) comprises a plurality of first electromagnetic valves (21), the branch flow paths (12) being provided with at least one first electromagnetic valve (21).

## Description

### CROSS-REFERENCE TO RELATED APPLICATIONS

The present disclosure claims priority to Chinese Patent Application No. 202310968243.3 filed on July 31, 2023, titled "VALVE BLOCK AND INTEGRATED VALVE FOR SUSPENSION SYSTEM, SUSPENSION SYSTEM AND VEHICLE", which is incorporated herein by reference in its entirety.

### FIELD

The present disclosure relates to the field of vehicle technologies, and in particular, to a valve block and an integrated valve for a suspension system, a suspension system, and a vehicle.

### BACKGROUND

In the related art, some vehicles are equipped with a suspension height adjustment system. Each shock absorber of the vehicle is provided with a regulating valve group for adjusting its height, so as to realize active control of the extension and retraction of each shock absorber. However, this system has a large number of components, a relatively complex structure, and occupies a relatively large space in the entire vehicle.

### SUMMARY

The present disclosure aims to solve at least one of the above-mentioned technical problems in the prior art to a certain extent. To this end, the present disclosure proposes an integrated valve for a suspension system, which can realize the miniaturization and integration of the integrated valve.

The present disclosure also provides a suspension system having the above-mentioned integrated valve.

The present disclosure also provides a vehicle having the above-mentioned integrated valve or suspension system.

The present disclosure also provides a valve block for a suspension system.

The integrated valve for a suspension system according to an embodiment of the present disclosure includes: a valve block, wherein a main flow path and a plurality of branch flow paths are arranged in the valve block; first ends of the plurality of branch flow paths are all connected to a first end of the main flow path; a second end of the main flow path is adapted to be connected to a pump assembly; a second end of each branch flow path is adapted to be connected to a shock absorber; and a control valve assembly, wherein the control valve assembly includes a plurality of first solenoid valves, and at least one first solenoid valve is arranged on each branch flow path.

According to the integrated valve for a suspension system in the embodiment of the present disclosure, the valve block has a main flow path and a plurality of branch flow paths. Each branch flow path is provided with a first solenoid valve, and each branch flow path is connected to a corresponding shock absorber. By adjusting the opening and closing of the first solenoid valve on each branch flow path, it can be controlled whether each shock absorber is connected to the main flow path, so as to control the posture of the suspension system. The integrated valve has high integration and occupies a small space, which is conducive to realizing the miniaturization and integration of the integrated valve, thereby helping to improve the space utilization rate of the entire vehicle and reduce the weight of the entire vehicle.

According to some embodiments of the present disclosure, the control valve assembly further includes at least one second solenoid valve; the valve block is further provided with at least one communication flow path; both ends of the communication flow path are respectively connected to two branch flow paths; and the second solenoid valve is arranged on the communication flow path.

According to some embodiments of the present disclosure, each branch flow path has a first flow section and a second flow section; one end of the first flow section is configured to be the second end of the branch flow path; the other end of the first flow section is connected to one end of the second flow section; the other end of the second flow section is configured to be the first end of the branch flow path; the first solenoid valve is arranged on the second flow section; and the first flow sections of the two branch flow paths are connected through the communication flow path.

According to some embodiments of the present disclosure, an axis of the first flow section, an axis of the second flow section, and an axis of the main flow path are perpendicular to each other; and projections of the first flow section and the main flow path on a plane perpendicular to the axis of the main flow path do not overlap.

According to some embodiments of the present disclosure, the communication flow path includes: a third flow section, a fourth flow section, and a fifth flow section; both ends of the fourth flow section are respectively connected to a first end of the third flow section and a first end of the fifth flow section; a second end of the third flow section and a second end of the fifth flow section are respectively connected to the two branch flow paths; the second end of the third flow section and the second end of the fifth flow section are configured to be the two ends of the communication flow path; the second solenoid valve is arranged on the fourth flow section; and the second end of the third flow section is coaxially connected to the first flow section to which it is connected.

According to some embodiments of the present disclosure, an axis of the fourth flow section is parallel to the axis of the second flow section; the opening at the end of the fourth flow section away from the third flow section is provided on a first side surface of the valve block; and the opening at the end of the second flow section away from the first flow section is provided on the first side surface of the valve block.

According to some embodiments of the present disclosure, the fifth flow section includes: a first sub-flow section, a second sub-flow section, and a third sub-flow section; both ends of the second sub-flow section are respectively connected to a first end of the first sub-flow section and a first end of the third sub-flow section; a second end of the first sub-flow section is connected to the fourth flow section; an axis of the first sub-flow section is parallel to the axis of the main flow path; an axis of the second sub-flow section is parallel to the axis of the second flow section; and the third sub-flow section is coaxially connected to the first flow section of the branch flow path to which it is connected.

According to some embodiments of the present disclosure, the control valve assembly further includes a third solenoid valve; the valve block is further provided with an accumulator flow path connected to the main flow path; the accumulator flow path is adapted to be connected to an accumulator; and the third solenoid valve is arranged on the accumulator flow path.

According to some embodiments of the present disclosure, the accumulator flow path includes: a sixth flow section, a seventh flow section, and an eighth flow section; both ends of the seventh flow section are respectively connected to the sixth flow section and the eighth flow section; the sixth flow section is connected to the main flow path; the third solenoid valve is arranged on the seventh flow section; an axis of the sixth flow section and an axis of the eighth flow section are perpendicular to the axis of the main flow path, and an axis of the seventh flow section is perpendicular to both the axis of the sixth flow section and the axis of the main flow path; the opening at the end of the seventh flow section away from the eighth flow section is provided on the first side surface of the valve block.

According to some embodiments of the present disclosure, the valve block has an inlet flow path; the inlet flow path is connected to the main flow path; and the inlet flow path is coaxially connected to the sixth flow section.

According to some embodiments of the present disclosure, the control valve assembly includes a cover plate; the cover plate and the first side surface of the valve block define an accommodating cavity; each first solenoid valve includes a first valve body and a first coil; the first valve body is partially disposed in the branch flow path; the first coil is disposed on the first valve body; and each first coil is accommodated in the accommodating cavity.

According to some embodiments of the present disclosure, the integrated valve for a suspension system further includes a connecting member; the valve block is provided with a mounting hole; the connecting member is disposed in the mounting hole; and a part of the connecting member protrudes from the valve block.

According to some embodiments of the present disclosure, the integrated valve for a suspension system further includes a vibration damping sleeve; the vibration damping sleeve is sheathed on the connecting member; and the vibration damping sleeve is mounted in the mounting hole.

According to some embodiments of the present disclosure, the vibration damping sleeve is in an interference fit with the mounting hole.

According to some embodiments of the present disclosure, an outer circumferential surface of the vibration damping sleeve is provided with a plurality of protrusions spaced apart.

According to some embodiments of the present disclosure, the plurality of protrusions are evenly spaced apart along a circumferential direction of the vibration damping sleeve.

According to a suspension system of an embodiment of another aspect of the present disclosure, it includes: an integrated valve, which is the above-mentioned integrated valve for a suspension system; a plurality of shock absorbers, the plurality of shock absorbers are connected in one-to-one correspondence with the plurality of branch flow paths; and a pump assembly, the pump assembly is connected to the main flow path.

According to the suspension system of the embodiment of the present disclosure, the valve block has a main flow path and a plurality of branch flow paths. Each branch flow path is provided with a first solenoid valve, and each branch flow path is connected to a corresponding shock absorber. The controller can control whether each shock absorber is connected to the main flow path by adjusting the opening and closing of the first solenoid valve on the branch flow path, so as to control the posture of the suspension system. The integrated valve has high integration and occupies a small space, which is conducive to realizing the miniaturization and integration of the integrated valve, thereby helping to improve the space utilization rate of the entire vehicle and reduce the weight of the entire vehicle.

According to some embodiments of the present disclosure, the suspension system further includes an accumulator; the accumulator is connected to the main flow path through the accumulator flow path in the valve block.

According to some embodiments of the present disclosure, the plurality of shock absorbers include four shock absorbers; the plurality of branch flow paths include four branch flow paths; and the controller controls the first solenoid valve to enable the shock absorbers to adjust the vehicle body height.

According to a vehicle of an embodiment of a further aspect of the present disclosure, it includes the above-mentioned integrated valve for a suspension system or the above-mentioned suspension system.

According to the vehicle of the embodiment of the present disclosure, the valve block has a main flow path and a plurality of branch flow paths. Each branch flow path is provided with a first solenoid valve, and each branch flow path is connected to a corresponding shock absorber. The controller can control whether each shock absorber is connected to the main flow path by adjusting the opening and closing of the first solenoid valve on the branch flow path, so as to control the posture of the suspension system. The integrated valve has high integration and occupies a small space, which is conducive to realizing the miniaturization and integration of the integrated valve, thereby helping to improve the space utilization rate of the entire vehicle and reduce the weight of the entire vehicle.

According to some embodiments of the present disclosure, a vehicle frame connecting plate is fixedly arranged on a vehicle frame of the vehicle; and the integrated valve is detachably connected to the vehicle frame connecting plate.

According to some embodiments of the present disclosure, the integrated valve is arranged adjacent to the middle position of the four wheels.

According to a valve block of an embodiment of yet another aspect of the present disclosure, a main flow path and a plurality of branch flow paths are arranged in the valve block; first ends of the plurality of branch flow paths are all connected to a first end of the main flow path; a second end of the main flow path is adapted to be connected to a pump assembly; and a second end of each branch flow path is adapted to be connected to a shock absorber.

According to the valve block for a suspension system of the embodiment of the present disclosure, the valve block has a main flow path and a plurality of branch flow paths. Each branch flow path is connected to a corresponding shock absorber. The pump assembly of the suspension system can adjust the expansion and contraction of the shock absorber through the valve block to realize the control of the posture of the suspension system. The valve block has high integration and occupies a small space, which is conducive to realizing the miniaturization and integration of the valve block, thereby helping to improve the space utilization rate of the entire vehicle and reduce the weight of the entire vehicle.

According to some embodiments of the present disclosure, the valve block is further provided with at least one communication flow path, and both ends of the communication flow path are respectively connected to two of the branch flow paths.

According to some embodiments of the present disclosure, each of the branch flow paths has a first flow section and a second flow section. One end of the first flow section is configured to be the second end of the branch flow path, the other end of the first flow section is connected to one end of the second flow section, and the other end of the second flow section is configured to be the first end of the branch flow path. The first flow sections of the two branch flow paths are connected through the communication flow path. An axis of the first flow section, an axis of the second flow section, and an axis of the main flow path are perpendicular to each other, and projections of the first flow section and the main flow path on a plane perpendicular to the axis of the main flow path do not overlap.

According to some embodiments of the present disclosure, the communication flow path includes a third flow section, a fourth flow section, and a fifth flow section. Both ends of the fourth flow section are respectively connected to a first end of the third flow section and a first end of the fifth flow section. A second end of the third flow section and a second end of the fifth flow section are respectively connected to the two branch flow paths, and the second end of the third flow section and the second end of the fifth flow section are configured to be the two ends of the communication flow path. The second end of the third flow section is coaxially connected to the first flow section to which it is connected.

According to some embodiments of the present disclosure, an axis of the fourth flow section is parallel to the axis of the second flow section, the opening at the end of the fourth flow section away from the third flow section is provided on a first side surface of the valve block, and the opening at the end of the second flow section away from the first flow section is provided on the first side surface of the valve block.

According to some embodiments of the present disclosure, the fifth flow section includes a first sub-flow section, a second sub-flow section, and a third sub-flow section. Both ends of the second sub-flow section are respectively connected to a first end of the first sub-flow section and a first end of the third sub-flow section. A second end of the first sub-flow section is connected to the fourth flow section, an axis of the first sub-flow section is parallel to the axis of the main flow path, an axis of the second sub-flow section is parallel to the axis of the second flow section, and the third sub-flow section is coaxially connected to the first flow section of the branch flow path to which it is connected.

According to some embodiments of the present disclosure, the valve block is further provided with an accumulator flow path connected to the main flow path, and the accumulator flow path is adapted to be connected to an accumulator.

According to some embodiments of the present disclosure, the accumulator flow path includes a sixth flow section, a seventh flow section, and an eighth flow section. Both ends of the seventh flow section are respectively connected to the sixth flow section and the eighth flow section, and the sixth flow section is connected to the main flow path. An axis of the sixth flow section and an axis of the eighth flow section are perpendicular to the axis of the main flow path, and an axis of the seventh flow section is perpendicular to both the axis of the sixth flow section and the axis of the main flow path. The opening at the end of the seventh flow section away from the eighth flow section is provided on the first side surface of the valve block.

According to some embodiments of the present disclosure, the valve block has an inlet flow path, the inlet flow path is connected to the main flow path, and the inlet flow path is coaxially connected to the sixth flow section. The additional aspects and advantages of the present disclosure will be partially given in the following description, and partially will become obvious from the following description, or be understood through the practice of the present disclosure.

### BRIEF DESCRIPTION OF THE DRAWINGS

Fig. 1 is a perspective view of an integrated valve according to an embodiment of the present disclosure;
Fig. 2 is a perspective view of a partial structure of the integrated valve according to an embodiment of the present disclosure;
Fig. 3 is an exploded view of the integrated valve according to an embodiment of the present disclosure;
Fig. 4 is a schematic diagram of the structure of a suspension system according to an embodiment of the present disclosure;
Fig. 5 is a cross-sectional view of the integrated valve at the main flow path according to an embodiment of the present disclosure;
Fig. 6 is a cross-sectional view of the integrated valve at the first flow section according to an embodiment of the present disclosure;
Fig. 7 is another cross-sectional view of the integrated valve at the main flow path according to an embodiment of the present disclosure;
Fig. 8 is a cross-sectional view of the integrated valve at the first sub-flow section and the second sub-flow section according to an embodiment of the present disclosure;
Fig. 9 is a general schematic diagram of the internal structure of the integrated valve according to an embodiment of the present disclosure;
Fig. 10 is a schematic diagram of the oil flow direction when multiple shock absorbers of the integrated valve are raised simultaneously according to an embodiment of the present disclosure;
Fig. 11 is a schematic diagram of the oil flow direction when multiple shock absorbers of the integrated valve are lowered simultaneously according to an embodiment of the present disclosure;
Fig. 12 is a schematic diagram of the oil flow direction when the F solenoid valve and the R solenoid valve of the integrated valve are opened according to an embodiment of the present disclosure;
Fig. 13 is a schematic diagram of the oil flow direction when the accumulator of the integrated valve is storing energy according to an embodiment of the present disclosure;
Fig. 14 is a schematic diagram of the cooperation between the integrated valve and the vehicle frame connecting plate according to an embodiment of the present disclosure;
Fig. 15 is a schematic diagram of a vehicle according to an embodiment of the present disclosure.

Reference Signs:
valve block 1, main flow path 11, branch flow path 12, FR branch flow path 12a, FL branch flow path 12b, RR branch flow path 12c, RL branch flow path 12d, first flow section 121, second flow section 122, communication flow path 13, F communication flow path 13a, R communication flow path 13b, third flow section 131, fourth flow section 132, fifth flow section 133, first sub-flow section 1331, second sub-flow section 1332, third sub-flow section 1333, accumulator flow path 14, sixth flow section 141, seventh flow section 142, eighth flow section 143, inlet flow path 15, FR shock absorber connection port 16a, FL shock absorber connection port 16b, RR shock absorber connection port 16c, RL shock absorber connection port 16d, pump assembly connection port 16e, accumulator connection port 16f, mounting hole 17, fastener 18, steel ball 19, control valve assembly 2, first solenoid valve 21, FR solenoid valve 21a, FL solenoid valve 21b, RR solenoid valve 21c, RL solenoid valve 21d, first valve body 211, first coil 212, second solenoid valve 22, F solenoid valve 22e, R solenoid valve 22f, second valve body 221, second coil 222, third solenoid valve 23, third valve body 231, third coil 232, cover plate 24, circuit board 25, connector interface 26, sealing ring 27, vehicle frame connection assembly 3, vibration damping sleeve 31, connecting member 32, vehicle frame connecting part 321, integrated valve 10, pump assembly 20, oil pump 201, liquid storage tank 202, check valve 203, return valve 204, pump damper 205, shock absorber 30, FR shock absorber 30a, FL shock absorber 30b, RR shock absorber 30c, RL shock absorber 30d, accumulator 40, suspension system 100, vehicle frame connecting plate 200, vehicle 1000.

### DETAILED DESCRIPTION

The embodiments of the present disclosure are described in detail below. Examples of the embodiments are shown in the accompanying drawings, wherein the same or similar reference numerals denote the same or similar elements or elements with the same or similar functions throughout. The embodiments described below with reference to the accompanying drawings are exemplary and are intended to explain the present disclosure, and shall not be construed as limiting the present disclosure.

In the description of the present disclosure, it will be understood that the terms "length", "width", "height", "upper", "lower", "front", "rear", "left", "right", "top", "bottom", "inner", "outer" and the like indicate positional relationships based on the positional relationships shown in the accompanying drawings. These terms are only for the convenience of describing the present disclosure and simplifying the description, and do not indicate or imply that the device or element referred to must have a specific orientation, be constructed and operated in a specific orientation. Therefore, these terms shall not be construed as limiting the present disclosure.

In addition, the terms "first" and "second" are used only for descriptive purposes, and will not be understood as indicating or implying relative importance or implicitly indicating the number of the indicated technical features. Thus, a feature defined with "first" or "second" may explicitly or implicitly include one or more of such features. In the description of the present disclosure, the meaning of "a plurality of" is at least two, such as two, three, etc., unless otherwise explicitly and specifically defined.

In the present disclosure, unless otherwise explicitly specified and limited, the terms "mount", "connect", "couple", "fix" and the like will be understood in a broad sense. For example, it may be a fixed connection, a detachable connection, or integration into one body; it may be a mechanical connection, an electrical connection, or communication with each other; it may be a direct connection, or an indirect connection through an intermediate medium; it may be communication between the interiors of two elements or an interaction relationship between two elements. For those of ordinary skill in the art, the specific meanings of the above terms in the present disclosure will be understood according to specific circumstances.

The integrated valve 10 for the suspension system 100, the suspension system 100, and the vehicle 1000 according to the embodiments of the present disclosure are described in detail below with reference to the accompanying drawings.

It should be noted that the suspension system 100 according to the embodiment of the present disclosure may be an air suspension system or a hydraulic suspension system. The flowing fluid between the pump assembly 20, the valve block 1, and the shock absorber 30 may be gas or liquid. Exemplarily, the following embodiments describe the suspension system 100 as a hydraulic suspension system, and the flowing fluid between the pump assembly 20, the valve block 1, and the shock absorber 30 as oil.

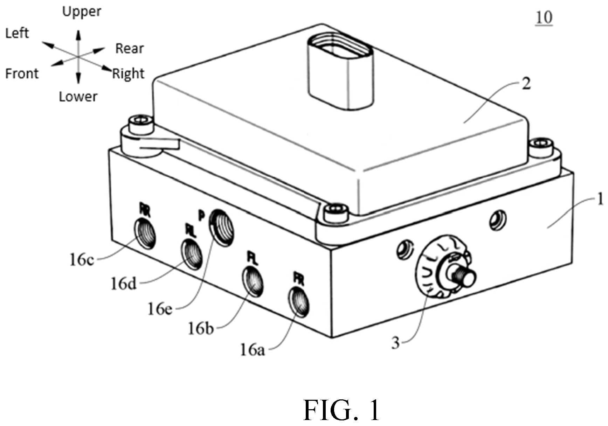

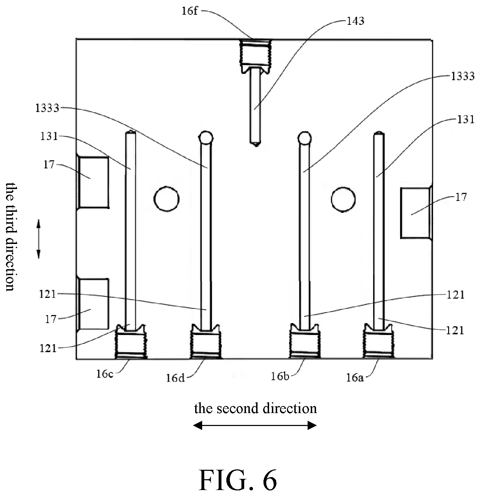

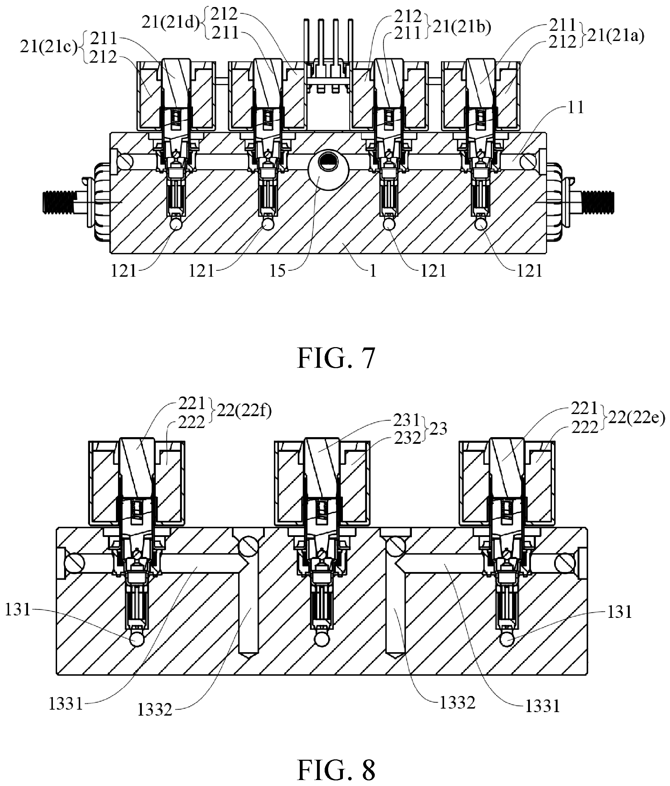

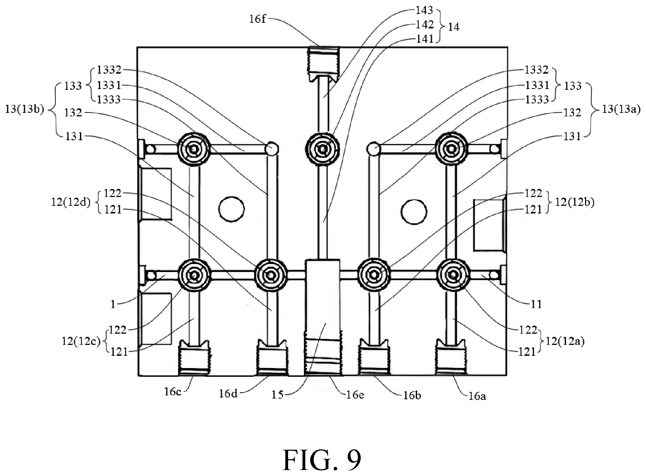

Referring to FIGS. 1 to 9, the integrated valve 10 for the suspension system 100 includes: a valve block 1 and a control valve assembly 2, wherein:

A main flow path 11 and a plurality of branch flow paths 12 are arranged in the valve block 1. The first ends of the plurality of branch flow paths 12 are all connected to the first end of the main flow path 11. The second end of the main flow path 11 is adapted to be connected to a pump assembly 20. The pump assembly 20 can be used to adjust the oil pressure of the main flow path 11. The pump assembly 20 can pump oil into the main flow path 11 to increase the oil pressure of the main flow path 11, and the oil in the main flow path 11 can also flow back to the pump assembly 20 to reduce the oil pressure of the main flow path 11. The second end of each branch flow path 12 is adapted to be connected to a shock absorber 30. Each branch flow path 12 can correspondingly communicate with one shock absorber 30. The number of shock absorbers 30 can be the same as the number of wheels of the vehicle 1000. The oil pressure in the shock absorber 30 correspondingly communicated with a branch flow path 12 can be adjusted by controlling the oil pressure of the branch flow path 12, so as to control the lifting of the shock absorber 30 and further control the posture of the suspension system 100. The integrated valve 10 may include only one valve block 1 to improve the integration degree of the integrated valve 10.

The control valve assembly 2 includes a plurality of first solenoid valves 21. At least one first solenoid valve 21 is arranged on each branch flow path 12. The first solenoid valve 21 is used to adjust the flow area of the branch flow path 12. That is to say, the first solenoid valve 21 on a branch flow path 12 can control the on-off of the branch flow path 12. The first solenoid valve 21 has an open state and a closed state. When the first solenoid valve 21 on a branch flow path 12 is in the open state, the branch flow path 12 connects the corresponding shock absorber 30 to the main flow path 11, and the oil pressure in the shock absorber 30 can be adjusted through the main flow path 11. When the first solenoid valve 21 on a branch flow path 12 is in the closed state, the branch flow path 12 disconnects the corresponding shock absorber 30 from the main flow path 11, and the change of oil pressure in the main flow path 11 does not affect the oil pressure of the branch flow path 12 and its corresponding shock absorber 30. At this time, the main flow path 11 can adjust the oil pressure of other shock absorbers 30. The integrated valve 10 may include only one control valve assembly 2 to improve the integration degree of the integrated valve 10.

It should be noted that when the first solenoid valve 21 is in the open state, the opening degree of the first solenoid valve 21 can be adjusted within a first preset opening range. Thus, the first solenoid valve 21 can control the increase or decrease of the flow area of the corresponding branch flow path 12, and further control the oil flow in the branch flow path 12.

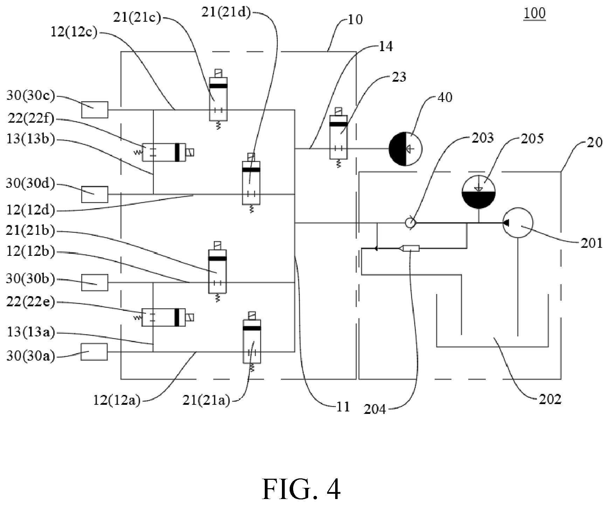

In a specific embodiment, referring to FIG. 4, the suspension system 100 includes: a Front-Right (FR) shock absorber 30a, a Front-Left (FL) shock absorber 30b, a Rear-Right (RR) shock absorber 30c, and a Rear-Left (RL) shock absorber 30d. The valve block 1 has a main flow path 11, an FR branch flow path 12a, an FL branch flow path 12b, an RR branch flow path 12c, and an RL branch flow path 12d. The FR branch flow path 12a connects the main flow path 11 and the FR shock absorber 30a, the FL branch flow path 12b connects the main flow path 11 and the FL shock absorber 30b, the RR branch flow path 12c connects the main flow path 11 and the RR shock absorber 30c, and the RL branch flow path 12d connects the main flow path 11 and the RL shock absorber 30d. The control valve assembly 2 includes an FR solenoid valve 21a, an FL solenoid valve 21b, an RR solenoid valve 21c, and an RL solenoid valve 21d. The FR solenoid valve 21a is provided on the FR branch flow path 12a and is used to control the flow area of the FR branch flow path 12a, the FL solenoid valve 21b is provided on the FL branch flow path 12b and is used to control the flow area of the FL branch flow path 12b, the RR solenoid valve 21c is provided on the RR branch flow path 12c and is used to control the flow area of the FR branch flow path 12a (RR branch flow path 12c), and the RL solenoid valve 21d is provided on the RL branch flow path 12d and is used to control the flow area of the FR branch flow path 12a (RL branch flow path 12d).

It should be noted that the suspension system 100 can adjust the posture of one or more of the FR shock absorber 30a, FL shock absorber 30b, RR shock absorber 30c, and RL shock absorber 30d to improve the adjustment efficiency of the suspension system 100. That is to say, when the suspension system 100 needs to control the posture of any one or more shock absorbers 30, the first solenoid valve 21 on the corresponding branch flow path 12 can be opened to connect the shock absorber 30 whose posture needs to be adjusted to the main flow path 11.

When the suspension system 100 needs to control the posture of the FR shock absorber 30a, the FR solenoid valve 21a is opened, and the FR shock absorber 30a is connected to the main flow path 11 through the FR branch flow path 12a. The pump assembly 20 adjusts the oil pressure of the main flow path 11 to change the oil pressure in the FR shock absorber 30a, and closes the FR solenoid valve 21a when the FR shock absorber 30a reaches a preset length, so that the FR shock absorber 30a maintains the adjusted length. When the FR shock absorber 30a needs to be extended, the pump assembly 20 can pump oil into the main flow path 11, so that the oil in the main flow path 11 is pressurized and flows into the FR shock absorber 30a through the FR branch flow path 12a. When the FR shock absorber 30a needs to be shortened, the oil in the FR shock absorber 30a flows back to the pump assembly 20 through the FR branch flow path 12a and the main flow path 11 under the action of the vehicle's own weight. Thus, the adjustment of the posture of the FR shock absorber 30a is realized.

When the suspension system 100 needs to control the posture of the FL shock absorber 30b, the FL solenoid valve 21b is opened, and the FL shock absorber 30b is connected to the main flow path 11 through the FL branch flow path 12b. The pump assembly 20 adjusts the oil pressure of the main flow path 11 to change the oil pressure in the FL shock absorber 30b, and closes the FL solenoid valve 21b when the FL shock absorber 30b reaches a preset length, so that the FL shock absorber 30b maintains the adjusted length. When the FL shock absorber 30b needs to be extended, the pump assembly 20 can pump oil into the main flow path 11, so that the oil in the main flow path 11 is pressurized and flows into the FL shock absorber 30b through the FL branch flow path 12b. When the FL shock absorber 30b needs to be shortened, the oil in the FL shock absorber 30b flows back to the pump assembly 20 through the FL branch flow path 12b and the main flow path 11 under the action of the vehicle's own weight. Thus, the adjustment of the posture of the FL shock absorber 30b is realized.

When the suspension system 100 needs to control the posture of the RR shock absorber 30c, the RR solenoid valve 21c is opened, and the RR shock absorber 30c is connected to the main flow path 11 through the RR branch flow path 12c. The pump assembly 20 adjusts the oil pressure of the main flow path 11 to change the oil pressure in the RR shock absorber 30c, and closes the RR solenoid valve 21c when the RR shock absorber 30c reaches a preset length, so that the RR shock absorber 30c maintains the adjusted length. When the RR shock absorber 30c needs to be extended, the pump assembly 20 can pump oil into the main flow path 11, so that the oil in the main flow path 11 is pressurized and flows into the RR shock absorber 30c through the RR branch flow path 12c. When the RR shock absorber 30c needs to be shortened, the oil in the RR shock absorber 30c flows back to the pump assembly 20 through the RR branch flow path 12c and the main flow path 11 under the action of the vehicle's own weight. Thus, the adjustment of the posture of the RR shock absorber 30c is realized.

When the suspension system 100 needs to control the posture of the RL shock absorber 30d, the RL solenoid valve 21d is opened, and the RL shock absorber 30d is connected to the main flow path 11 through the RL branch flow path 12d. The pump assembly 20 adjusts the oil pressure of the main flow path 11 to change the oil pressure in the RL shock absorber 30d, and closes the RL solenoid valve 21d when the RL shock absorber 30d reaches a preset length, so that the RL shock absorber 30d maintains the adjusted length. When the RL shock absorber 30d needs to be extended, the pump assembly 20 can pump oil into the main flow path 11, so that the oil in the main flow path 11 is pressurized and flows into the RL shock absorber 30d through the RL branch flow path 12d. When the RL shock absorber 30d needs to be shortened, the oil in the RL shock absorber 30d flows back to the pump assembly 20 through the RL branch flow path 12d and the main flow path 11 under the action of the vehicle's own weight. Thus, the adjustment of the posture of the RL shock absorber 30d is realized.

When the suspension system 100 needs to control the FR shock absorber 30a, FL shock absorber 30b, RR shock absorber 30c, and RL shock absorber 30d to lift or lower simultaneously, the FR solenoid valve 21a, FL solenoid valve 21b, RR solenoid valve 21c, and RL solenoid valve 21d are opened simultaneously, so that all shock absorbers 30 are connected to the main flow path 11.

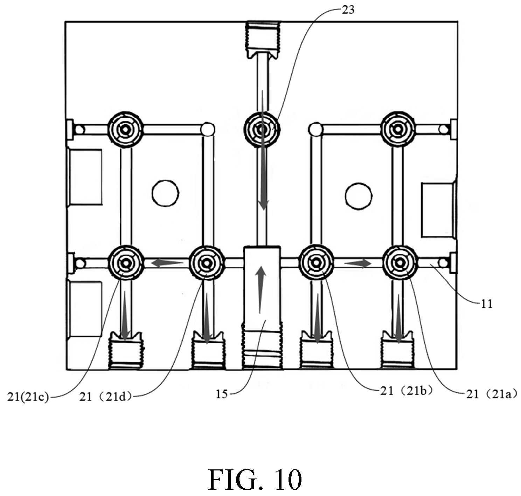

Referring to FIG. 4 and FIG. 10, when the FR shock absorber 30a, FL shock absorber 30b, RR shock absorber 30c, and RL shock absorber 30d need to be extended simultaneously, the pump assembly 20 can pump oil into the main flow path 11, so that the oil in the main flow path 11 is pressurized and flows to the corresponding shock absorbers 30 through the FR branch flow path 12a, FL branch flow path 12b, RR branch flow path 12c, and RL branch flow path 12d, thereby lifting the suspension as a whole. At the same time, all the first solenoid valves 21 are closed when each shock absorber 30 reaches the preset length, so that each shock absorber 30 maintains the adjusted length.

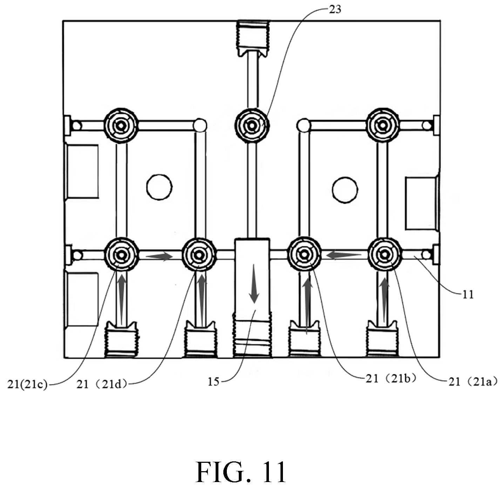

Referring to FIG. 4 and FIG. 11, when the FR shock absorber 30a, FL shock absorber 30b, RR shock absorber 30c, and RL shock absorber 30d need to be shortened simultaneously, the oil in each shock absorber 30 flows back to the pump assembly 20 through the corresponding branch flow path 12 and the main flow path 11 under the action of the vehicle's own weight, thereby lowering the suspension as a whole. At the same time, all the first solenoid valves 21 are closed when each shock absorber 30 reaches the preset length, so that each shock absorber 30 maintains the adjusted length.

According to the integrated valve 10 for the suspension system 100 of the embodiment of the present disclosure, the valve block 1 has a main flow path 11 and a plurality of branch flow paths 12. Each branch flow path 12 is provided with a first solenoid valve 21, and each branch flow path 12 is connected to a corresponding shock absorber 30. By adjusting the opening and closing of the first solenoid valve 21 on the branch flow path 12, it can be controlled whether each shock absorber 30 is connected to the main flow path 11, so as to control the posture of the suspension system 100. The integrated valve 10 has a high integration degree and occupies a small space, which is conducive to realizing the miniaturization and integration of the integrated valve 10, thereby helping to improve the space utilization rate of the entire vehicle and reduce the weight of the entire vehicle.

In some embodiments of the present disclosure, referring to FIG. 4, the control valve assembly 2 further includes at least one second solenoid valve 22. The valve block 1 is further provided with at least one communication flow path 13. Both ends of the communication flow path 13 are respectively connected to two branch flow paths 12, and the second solenoid valve 22 is arranged on the communication flow path 13. The second solenoid valve 22 on the communication flow path 13 is used to adjust the flow area of the communication flow path 13. That is to say, the second solenoid valve 22 on the communication flow path 13 can control the on-off of the communication flow path 13. The second solenoid valve 22 has an open state and a closed state. When the second solenoid valve 22 on the communication flow path 13 is in the open state, it can connect the two branch flow paths 12 connected to the communication flow path 13, so that the shock absorbers 30 corresponding to these two branch flow paths 12 can quickly establish pressure balance, thereby maintaining the vehicle posture balance and the vehicle stable state.

It should be noted that when the second solenoid valve 22 is in the open state, the opening degree of the second solenoid valve 22 can be adjusted within a second preset opening range. Thus, the second solenoid valve 22 can control the increase or decrease of the flow area of the corresponding communication flow path 13, and further control the oil flow rate in the communication flow path 13.

In some embodiments of the present disclosure, a communication flow path 13 is arranged between two adjacent branch flow paths 12. For example, the valve block 1 is provided with four branch flow paths 12, a communication flow path 13 is arranged between two of the four branch flow paths 12, and a communication flow path 13 is arranged between the other two of the four branch flow paths 12.

In a specific embodiment, referring to FIG. 4 to FIG. 9, the valve block 1 defines an F (Front) communication flow path 13a and an R (Rear) communication flow path 13b. The F communication flow path 13a connects the FR branch flow path 12a and the FL branch flow path 12b. The F communication flow path 13a is provided with an F solenoid valve 22e, and the F solenoid valve 22e is used to adjust the flow area of the F communication flow path 13a. The R communication flow path 13b connects the RR branch flow path 12c and the RL branch flow path 12d. The R communication flow path 13b is provided with an R solenoid valve 22f, and the R solenoid valve 22f is used to adjust the flow area of the R communication flow path 13b.

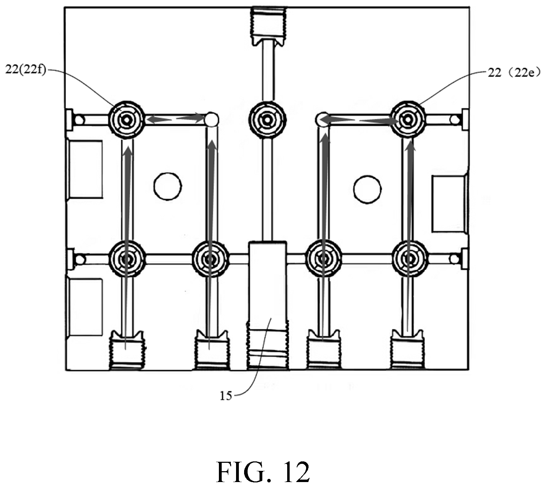

Referring to FIG. 4 and FIG. 12, when there is a pressure imbalance between the FR shock absorber 30a and the FL shock absorber 30b, the F solenoid valve 22e can be opened to enable oil communication between the FR shock absorber 30a and the FL shock absorber 30b. The oil inside the FR shock absorber 30a and the FL shock absorber 30b can flow to the low-pressure side by themselves, and the F solenoid valve 22e is closed until the pressure balance is re-established.

Referring to FIG. 4 and FIG. 12, when there is a pressure imbalance between the RR shock absorber 30c and the RL shock absorber 30d, the R solenoid valve 22f can be opened to enable oil communication between the RR shock absorber 30c and the RL shock absorber 30d. The oil inside the RR shock absorber 30c and the RL shock absorber 30d can flow to the low-pressure side by themselves, and the R solenoid valve 22f is closed until the pressure balance is re-established.

In some embodiments of the present disclosure, referring to FIG. 1 to FIG. 9, each branch flow path 12 has a first flow section 121 and a second flow section 122. One end of the first flow section 121 is configured to be the second end of the branch flow path 12; in other words, one end of the first flow section 121 is adapted to be connected to the shock absorber 30. The other end of the first flow section 121 is connected to one end of the second flow section 122, and the other end of the second flow section 122 is configured to be the first end of the branch flow path 12; in other words, the other end of the second flow section 122 is connected to the main flow path. The second flow section 122 is provided with a first solenoid valve 21, and the first solenoid valve 21 can adjust the flow area of the second flow section 122. The first flow sections 121 of the two branch flow paths 12 are connected through the communication flow path 13, and the connection between the two branch flow paths 12 and the communication flow path 13 is configured to be the third end of the branch flow path 12. Thus, when it is necessary to establish pressure balance between the two shock absorbers 30, there is no need to control the opening of the first solenoid valve 21 on the branch flow path 12 corresponding to the shock absorber 30; instead, the two shock absorbers 30 can be connected by controlling the opening of the second solenoid valve 22 on the communication flow path 13, which is conducive to improving the control efficiency of the integrated valve 10.

In some embodiments of the present disclosure, referring to FIG. 1 to FIG. 9, the control valve assembly 2 further includes a third solenoid valve 23. The valve block 1 is further provided with an accumulator flow path 14 connected to the main flow path 11, and the accumulator flow path 14 is adapted to be connected to the accumulator 40. The accumulator flow path 14 is provided with the third solenoid valve 23, and the third solenoid valve 23 on the accumulator flow path 14 is used to adjust the flow area of the accumulator flow path 14. That is to say, the third solenoid valve 23 on the accumulator flow path 14 can control the on-off of the accumulator flow path 14. When the accumulator 40 stores and releases energy, the third solenoid valve 23 is opened to connect the accumulator 40 to the main flow path 11, and the pump assembly 20 can pump oil into the accumulator 40 through the main flow path 11 and the accumulator flow path 14 to enable the accumulator 40 to store energy. When the shock absorber 30 needs to be extended, the pump assembly 20 and the accumulator 40 can simultaneously deliver oil to the main flow path 11. The accumulator 40 can reduce the power of the pump assembly 20, reduce the operating noise of the pump assembly 20, and prolong the service life of the pump assembly 20. Meanwhile, when a large number of shock absorbers 30 need to be raised, the load of the main flow path 11 requires a large flow rate, and the accumulator 40 can discharge oil to supplement the flow rate of the pump assembly 20.

It should be noted that when the third solenoid valve 23 is in the open state, the opening degree of the third solenoid valve 23 can be adjusted within a third preset opening range. Thus, the third solenoid valve 23 can control the increase or decrease of the flow area of the corresponding accumulator flow path 14, and further control the oil flow rate in the accumulator flow path 14.

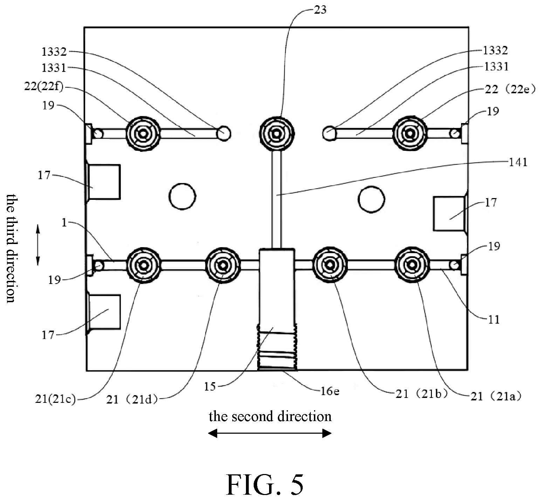

In some embodiments of the present disclosure, referring to FIG. 5 to FIG. 9, the axis of the first flow section 121, the axis of the second flow section 122, and the axis of the main flow path 11 are perpendicular to each other. The projections of the first flow section 121 and the main flow path 11 on a plane perpendicular to the axis of the main flow path 11 do not overlap. This facilitates the processing and manufacturing of the valve block 1, makes full use of the space inside the valve block 1, and improves the integration degree of the valve block 1.

Referring to FIG. 1 and FIG. 5 to FIG. 8, the direction parallel to the axis of the second flow section 122 is denoted as the first direction, the direction parallel to the axis of the main flow path 11 is denoted as the second direction, and the direction parallel to the axis of the first flow section 121 is denoted as the third direction. The first direction, the second direction, and the third direction are perpendicular to each other pairwise. The main flow path 11 can extend along the second direction, and each branch flow path 12 has a first flow section 121 extending along the third direction and a second flow section 122 extending along the first direction. The second flow section 122 connects the first flow section 121 and the main flow path 11, and the second flow section 122 is provided with the first solenoid valve 21. Here, the first direction may be the height direction of the valve block 1, i.e., the up-down direction in FIG. 1; the second direction may be the width direction of the valve block 1, i.e., the left-right direction in FIG. 1; and the third direction may be the length direction of the valve block 1, i.e., the front-back direction in FIG. 1.

It should be noted that the valve block 1 is an integral part. The valve block 1 may be integrally formed, or may be formed by fixedly connecting a plurality of blocks (e.g., a plurality of blocks welded or bolted together). The blank of the valve block 1 may be a solid plate, and the flow paths such as the main flow path 11, branch flow paths 12, and communication flow path 13 inside the valve block 1 are all formed by machining the solid plate. A drilling tool can drill along the second direction to form the main flow path 11, and drill along the third direction and the first direction respectively to form the first flow section 121 and the second flow section 122. The main flow path 11 may be a through hole, and both ends of the main flow path 11 may be provided with sealing steel balls 19. The first flow section 121 and the second flow section 122 are connected blind holes. The first flow section 121 is offset from the main flow path 11 in the first direction. The first flow section 121 is formed with a shock absorber connection port on the front side of the valve block 1, which is adapted to be connected to the shock absorber 30; the shock absorber connection port may be a threaded hole to facilitate the connection of hydraulic pipelines. The second flow section 122 passes through the main flow path 11, and the second flow section 122 is formed with a first solenoid valve mounting opening on the upper side of the valve block 1, which is adapted to mount the first solenoid valve 21. This facilitates the processing and manufacturing of the valve block 1, makes full use of the space inside the valve block 1, and improves the integration degree of the valve block 1.

Referring to FIG. 1 to FIG. 9, the valve block 1 defines an FR branch flow path 12a, an FL branch flow path 12b, an RR branch flow path 12c, and an RL branch flow path 12d. The first flow section 121 of the FR branch flow path 12a is formed with an FR shock absorber connection port 16a on the front side of the valve block 1, which is adapted to be connected to the FR shock absorber 30a. The first flow section 121 of the FL branch flow path 12b is formed with an FL shock absorber connection port 16b on the front side of the valve block 1, which is adapted to be connected to the FL shock absorber 30b. The first flow section 121 of the RR branch flow path 12c is formed with an RR shock absorber connection port 16c on the front side of the valve block 1, which is adapted to be connected to the RR shock absorber 30c. The first flow section 121 of the RL branch flow path 12d is formed with an RL shock absorber connection port 16d on the front side of the valve block 1, which is adapted to be connected to the RL shock absorber 30d.

In addition, the FR shock absorber connection port 16a, FL shock absorber connection port 16b, RR shock absorber connection port 16c, and RL shock absorber connection port 16d may be directly connected to the corresponding shock absorbers 30, or may be connected to the central control cylinder of the suspension system 100 and then connected to the corresponding shock absorbers 30 through the central control cylinder.

In some embodiments of the present disclosure, referring to FIG. 1 to FIG. 9, the communication flow path 13 includes: a third flow section 131, a fourth flow section 132, and a fifth flow section 133. Both ends of the fourth flow section 132 are respectively connected to the first end of the third flow section 131 and the first end of the fifth flow section 133. The second end of the third flow section 131 and the second end of the fifth flow section 133 are respectively connected to the two branch flow paths 12, and the second end of the third flow section 131 and the second end of the fifth flow section 133 are configured to be the two ends of the communication flow path 13. The fourth flow section 132 is provided with the second solenoid valve 22. In other words, the third flow section 131 and the fifth flow section 133 of the communication flow path 13 are respectively connected to their corresponding branch flow paths 12, so that the communication flow path 13 connects the two branch flow paths 12. The third flow section 131, the fourth flow section 132, and the fifth flow section 133 of the communication flow path 13 can all be formed by drilling tools on a solid plate.

In some embodiments of the present disclosure, referring to FIG. 1 to FIG. 9, the second end of the third flow section 131 is coaxially connected to the first flow section 121 to which it is connected. It will be understood that in the first direction, both the third flow section 131 and the first flow section 121 are located on the same side of the main flow path 11; the third flow section 131 and the first flow section 121 of its corresponding branch flow path 12 may be at the same height; and both the third flow section 131 and the first flow section 121 of its corresponding branch flow path 12 may extend along the third direction. That is to say, when manufacturing the valve block 1, a drilling tool can drill along the third direction to form the third flow section 131 and the first flow section 121 of its corresponding branch flow path 12 at the same time. This is conducive to reducing the processing difficulty of the valve block 1, simplifying the drilling process, and improving the processing efficiency and manufacturability of the valve block 1.

In some embodiments of the present disclosure, referring to FIG. 1 to FIG. 9, the axis of the fourth flow section 132 is parallel to the axis of the second flow section 122, which facilitates the processing and manufacturing of the valve block 1, makes full use of the space inside the valve block 1, and improves the integration degree of the valve block 1. Meanwhile, the opening at the end of the fourth flow section 132 away from the third flow section 131 is provided on the first side surface of the valve block 1, and the opening at the end of the second flow section 122 away from the first flow section 121 is provided on the first side surface of the valve block 1. Thus, the first solenoid valve 21 can be inserted into the second flow section 122 through the opening at the end of the second flow section 122 away from the first flow section 121, and the second solenoid valve 22 can be inserted into the fourth flow section 132 through the opening at the end of the fourth flow section 132 away from the third flow section 131. The mounting openings for the first solenoid valve 21 and the second solenoid valve 22 are all provided on the same side surface of the valve block 1, which facilitates the installation of the first solenoid valve 21 and the second solenoid valve 22.

Here, the first side surface of the valve block 1 may be the upper side surface of the valve block 1. That is to say, the second flow section 122 is formed with a first solenoid valve mounting opening on the upper side surface of the valve block 1, which is adapted to mount the first solenoid valve 21; and the fourth flow section 132 is formed with a second solenoid valve mounting opening on the upper side surface of the valve block 1, which is adapted to mount the second solenoid valve 22.

In some embodiments of the present disclosure, referring to FIG. 1 to FIG. 9, the fifth flow section 133 includes: a first sub-flow section 1331, a second sub-flow section 1332, and a third sub-flow section 1333. Both ends of the second sub-flow section 1332 are respectively connected to the first end of the first sub-flow section 1331 and the first end of the third sub-flow section 1333. The second end of the first sub-flow section 1331 is connected to the fourth flow section 132. The axis of the first sub-flow section 1331 is parallel to the axis of the main flow path 11, the axis of the second sub-flow section 1332 is parallel to the axis of the second flow section 122, and the third sub-flow section 1333 is coaxially connected to the first flow section 121 of the branch flow path 12 to which it is connected. That is to say, the first sub-flow section 1331 extends along the second direction, the second sub-flow section 1332 extends along the first direction, and the third sub-flow section 1333 is opposite to and connected with the first flow section 121 of the corresponding branch flow path 12. In the first direction, both the third sub-flow section 1333 and the first flow section 121 are located on the same side of the main flow path 11; the third sub-flow section 1333 and the first flow section 121 of its corresponding branch flow path 12 may be at the same height; and both the third sub-flow section 1333 and the first flow section 121 of its corresponding branch flow path 12 may extend along the third direction. By arranging the positions and relative relationships of the various flow paths in the valve block 1, the flow paths in the valve block 1 are distributed uniformly, facilitating the processing and manufacturing of each flow path.

When manufacturing the valve block 1, a drilling tool can drill along the second direction to form the first sub-flow section 1331, and the first sub-flow section 1331 can pass through the fourth flow section 132. The drilling tool can drill along the first direction to form the second sub-flow section 1332, and can drill along the third direction to form the third sub-flow section 1333 and the first flow section 121 of its corresponding branch flow path 12 at the same time. This helps reduce the processing difficulty of the valve block 1, simplify the drilling process, and improve the processing efficiency and manufacturability of the valve block 1.

In some embodiments of the present disclosure, referring to FIG. 1 to FIG. 9, the accumulator flow path 14 includes: a sixth flow section 141, a seventh flow section 142, and an eighth flow section 143. Both ends of the seventh flow section 142 are respectively connected to the sixth flow section 141 and the eighth flow section 143. The sixth flow section 141 is connected to the main flow path 11, and the seventh flow section 142 is provided with the third solenoid valve 23. The axis of the sixth flow section 141 and the axis of the eighth flow section 143 are perpendicular to the axis of the main flow path 11, and the axis of the seventh flow section 142 is perpendicular to both the axis of the sixth flow section 141 and the axis of the main flow path 11. The opening at the end of the seventh flow section 142 away from the eighth flow section 143 is provided on the first side surface of the valve block 1. That is to say, the axis of the sixth flow section 141 is perpendicular to the axis of the main flow path 11, the axis of the eighth flow section 143 is perpendicular to the axis of the main flow path 11, and the axis of the seventh flow section 142, the axis of the sixth flow section 141, and the axis of the main flow path 11 are perpendicular to each other pairwise. In other words, the seventh flow section 142 extends along the first direction, both the sixth flow section 141 and the eighth flow section 143 extend along the third direction, and the sixth flow section 141 and the eighth flow section 143 may be offset in the first direction. The third solenoid valve 23 on the seventh flow section 142 can be used to control the on-off of the seventh flow section 142. The sixth flow section 141, seventh flow section 142, and eighth flow section 143 of the accumulator flow path 14 can all be formed by drilling tools on a solid plate. The seventh flow section 142 is formed with a third solenoid valve mounting opening on the first side surface of the valve block 1, which is adapted to mount the third solenoid valve 23. The eighth flow section 143 is formed with an accumulator connection port 16f on the rear side surface of the valve block 1, which is adapted to be connected to the accumulator 40; the accumulator connection port 16f may be a threaded hole to facilitate the connection of hydraulic pipelines.

It will be understood that the third solenoid valve 23 can be inserted into the seventh flow section 142 through the opening at the end of the seventh flow section 142 away from the eighth flow section 143. The mounting openings for the first solenoid valve 21, the second solenoid valve 22, and the third solenoid valve 23 can all be provided on the same side surface of the valve block 1, which facilitates the installation of the first solenoid valve 21, the second solenoid valve 22, and the third solenoid valve 23.

In some embodiments of the present disclosure, referring to FIG. 1 to FIG. 9, the valve block 1 has an inlet flow path 15. The inlet flow path 15 is connected to the main flow path 11 and is coaxially connected to the sixth flow section 141. The inlet flow path 15 can extend along the third direction, and is opposite to and connected with the sixth flow section 141. The inlet flow path 15 can be formed by a drilling tool on a solid plate. The inlet flow path 15 is formed with a pump assembly connection port 16e on the front side surface of the valve block 1, which is adapted to be connected to the pump assembly 20; the pump assembly connection port 16e may be a threaded hole to facilitate the connection of hydraulic pipelines. During the drilling process of the inlet flow path 15 and the sixth flow section 141, the drilling tool can drill from the same position, improving the integrity and integration degree of the valve block 1.

Referring to FIG. 5, the inlet flow path 15 passes through the middle section of the main flow path 11. In the second direction, the lengths of the main flow path 11 on both sides of the inlet flow path 15 are equal, and the main flow path 11 on each side is connected to the same number of branch flow paths 12. This ensures a reasonable layout distribution of the various flow paths in the valve block 1, making the valve block 1 easy to process. When the main flow path 11 adjusts the pressure of each branch flow path 12, the response speed of each branch flow path 12 is basically consistent. Meanwhile, the distribution density of flow paths at different positions on the valve block 1 does not differ much, ensuring the structural strength and reliability of the valve block 1.

Referring to FIG. 5, the diameter of the inlet flow path 15 is larger than that of the main flow path 11. This ensures the flow rate of the inlet flow path 15, allowing the pump assembly 20 to quickly adjust the pressure of the main flow path 11 through the inlet flow path 15.

In some embodiments of the present disclosure, referring to FIG. 1 to FIG. 3, the control valve assembly 2 includes a cover plate 24. The cover plate 24 and the first side surface of the valve block 1 define an accommodating cavity (the first side surface of the valve block 1 may be the upper side surface of the valve block 1). Each first solenoid valve 21 includes a first valve body 211 and a first coil 212. The first valve body 211 is partially disposed in the branch flow path 12, the first coil 212 is disposed on the first valve body 211, and each first coil 212 is accommodated in the accommodating cavity. The accommodating cavity can protect the first coil 212, improving the service life and reliability of the first coil 212. The first valve body 211 may include a first valve housing and a first valve core; the first coil 212 may be sheathed on the first valve housing, and the first valve housing is provided with a first valve hole. By controlling the energization of the first coil 212, the first valve core can be controlled to move in the first valve housing, so as to control the opening size of the first valve hole and further adjust the flow area of the branch flow path 12.

In some embodiments of the present disclosure, referring to FIG. 1 to FIG. 3, each second solenoid valve 22 includes a second valve body 221 and a second coil 222. The second valve body 221 is partially disposed in the communication flow path 13, the second coil 222 is disposed on the second valve body 221, and each second coil 222 is accommodated in the accommodating cavity. The accommodating cavity can protect the second coil 222, improving the service life and reliability of the second coil 222. The second valve body 221 may include a second valve housing and a second valve core; the second coil 222 may be sheathed on the second valve housing, and the second valve housing is provided with a second valve hole. By controlling the energization of the second coil 222, the second valve core can be controlled to move in the second valve housing, so as to control the opening size of the second valve hole and further adjust the flow area of the communication flow path 13.

In some embodiments of the present disclosure, referring to FIG. 1 to FIG. 3, each third solenoid valve 23 includes a third valve body 231 and a third coil 232. The third valve body 231 is partially disposed in the accumulator flow path 14, the third coil 232 is disposed on the third valve body 231, and each third coil 232 is accommodated in the accommodating cavity. The accommodating cavity can protect the third coil 232, improving the service life and reliability of the third coil 232. The third valve body 231 may include a third valve housing and a third valve core; the third coil 232 may be sheathed on the third valve housing, and the third valve housing is provided with a third valve hole. By controlling the energization of the third coil 232, the third valve core can be controlled to move in the third valve housing, so as to control the opening size of the third valve hole and further adjust the flow area of the accumulator flow path 14.

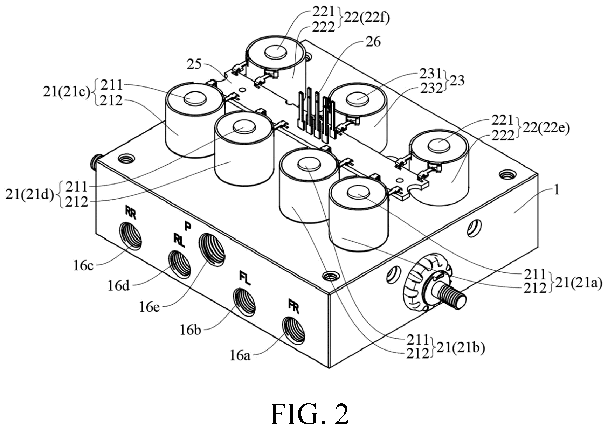

In some embodiments of the present disclosure, referring to FIG. 2, the control valve assembly 2 further includes a circuit board 25. The circuit board 25 is disposed in the accommodating cavity and is electrically connected to the first coil 212, the second coil 222, and the third coil 232. The circuit board 25 is further provided with a connector interface 26, which is adapted to be electrically connected to a controller. The controller can control the energization of the first coil 212, the second coil 222, and the third coil 232 respectively through the connector interface 26 and the circuit board 25, so as to realize the posture adjustment of the suspension system 100.

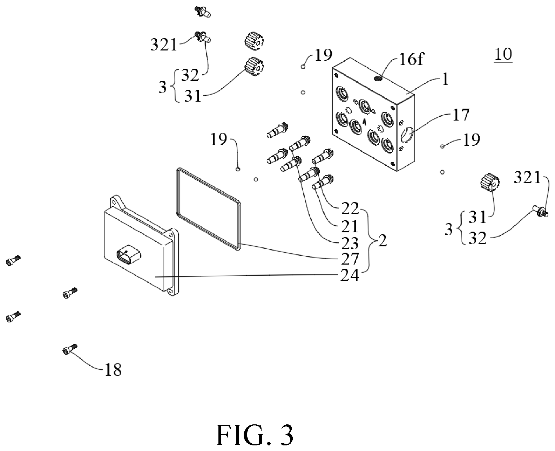

Referring to FIG. 3, the control valve assembly further includes a sealing ring 27. The sealing ring 27 is disposed between the cover plate 24 and the valve block 1 to improve the sealing performance of the accommodating cavity, preventing water or dust from entering the accommodating cavity, and thus enhancing the service life and reliability of the first coil 212, the second coil 222, the third coil 232, and the circuit board 25.

In some embodiments of the present disclosure, referring to FIG. 1 and FIG. 3, the integrated valve 10 further includes a connecting member 32. The valve block 1 is provided with a mounting hole 17, and the connecting member 32 is disposed in the mounting hole 17, with a part of the connecting member 32 protruding from the valve block 1. The protruding part of the connecting member 32 can be used to connect to the vehicle frame connecting plate 200, and the vehicle frame connecting plate 200 can be fixedly arranged on the vehicle frame of the vehicle 1000. The valve block 1 can be connected to the vehicle frame connecting plate 200 of the vehicle 1000 through the connecting member 32, facilitating the fixation of the integrated valve 10 on the vehicle frame. The integrated valve 10 has a small volume, a simple and compact structure, little impact on surrounding components, and high convenience in disassembly, assembly, and maintenance.

In some embodiments of the present disclosure, referring to FIG. 1, FIG. 3, and FIG. 14, the integrated valve 10 further includes a vibration damping sleeve 31. The vibration damping sleeve 31 is sheathed on the connecting member 32 and mounted in the mounting hole 17. The vibration damping sleeve 31 can reduce the transmission of vehicle frame vibration to the valve block 1, improving the reliability of the valve block 1 and realizing flexible connection between the valve block 1 and the vehicle frame. In this embodiment, the vibration damping sleeve 31 is a rubber part, and the mounting hole 17 can be configured to be a mounting hole 17 with a groove structure. The vibration damping sleeve 31 can be integrated with the mounting hole 17 through a vulcanization process; alternatively, the vibration damping sleeve 31 can be fixedly connected to the mounting hole 17 by bonding, clamping, or other methods. The connecting member 32 may be a double-ended stud: one end of the connecting member 32 is in threaded fit with the vibration damping sleeve 31, and the vehicle frame connecting part 321 at the other end of the connecting member 32 can pass through the clamping groove on the vehicle frame connecting plate 200 and then be matched with a nut, so as to fix the integrated valve 10 on the vehicle frame.

In some embodiments of the present disclosure, referring to FIG. 1 and FIG. 3, the vibration damping sleeve 31 may have a cylindrical structure and is in an interference fit with the mounting hole 17. The mounting hole 17 can squeeze the vibration damping sleeve 31, so as to improve the tightness of the contact between the mounting hole 17 and the vibration damping sleeve 31 and enhance the vibration damping effect of the vibration damping sleeve 31 on the valve block 1.

In some embodiments of the present disclosure, referring to FIG. 1 and FIG. 3, the outer circumferential surface of the vibration damping sleeve 31 is provided with a plurality of protrusions spaced apart. The protrusions can extend along the axial direction of the vibration damping sleeve, adjust the damping of the vibration damping sleeve 31, and increase the friction force between the vibration damping sleeve 31 and the mounting hole 17 at the connection. This helps improve the vibration damping effect of the vibration damping sleeve 31 and prevent the vibration damping sleeve 31 from moving in the mounting hole 17.

In some embodiments of the present disclosure, referring to FIG. 1 and FIG. 3, the plurality of protrusions are evenly spaced along the circumferential direction of the vibration damping sleeve 31. When the vehicle frame of the vehicle 1000 vibrates, the evenly spaced protrusions are more likely to deform, absorb the vibration more quickly, improve the damping characteristics of the vibration damping sleeve 31, and enhance the vibration damping effect of the vibration damping sleeve 31.

In some embodiments of the present disclosure, referring to FIG. 1 and FIG. 3, the vehicle frame connection assembly 3 is mainly composed of the vibration damping sleeve 31 and the connecting member 32. One end of the vehicle frame connection assembly 3 is connected to the mounting hole 17, and the other end is provided with the vehicle frame connecting part 321. The valve block 1 can be fixedly connected to the vehicle frame of the vehicle 1000 through the vehicle frame connection assembly 3, facilitating the fixation of the integrated valve 10 on the vehicle frame. The integrated valve 10 has a small volume, a simple and compact structure, little impact on surrounding components, and high convenience in disassembly, assembly, and maintenance.

In some embodiments of the present disclosure, there are a plurality of vehicle frame connection assemblies 3 (e.g., three). The valve block 1 is provided with mounting holes 17 corresponding to the number of vehicle frame connection assemblies 3, and the mounting holes 17 can be arranged on at least two opposite sides of the valve block 1. A vehicle frame connecting plate 200 adapted to cooperate with the vehicle frame connecting part 321 can be fixedly arranged on the longitudinal beam of the vehicle frame.

The integrated valve 10 according to the embodiment of the present disclosure can integrate the valve block 1 and the control valve assembly 2, with a high integration degree. It can control the lifting of each shock absorber 30 of the vehicle through a small number of solenoid valves 21, realizing the function of adjusting the vehicle suspension posture. The integrated valve 10 integrates the pressure control function for each shock absorber 30, so as to reduce the number of parts of the integrated valve 10 and the difficulty of arrangement. With high integration degree and small space occupation, the integrated valve 10 is conducive to realizing its miniaturization and integration, and improving the reliability of suspension posture control. Meanwhile, the pipeline interface of the integrated valve 10 and its connection method with the vehicle body are both designed in a generalized manner, enabling the platformization and generalization of the integrated valve 10 to match different vehicle models and reduce the design and R&D costs of the integrated valve 10.

Referring to FIG. 4, a suspension system 100 according to an embodiment of another aspect of the present disclosure includes: an integrated valve 10, a plurality of shock absorbers 30, and a pump assembly 20. Among them, the integrated valve 10 is the integrated valve 10 for the suspension system 100 in the above embodiments; the plurality of shock absorbers 30 are connected in one-to-one correspondence with the plurality of branch flow paths 12; and the pump assembly 20 is connected to the main flow path 11.

In some embodiments of the present disclosure, the suspension system 100 further includes a controller, which is used to control the plurality of first solenoid valves 21, so that the suspension system 100 can adjust the height of each shock absorber 30.

In some embodiments of the present disclosure, the suspension system 100 includes: one integrated valve 10, a plurality of shock absorbers 30, one pump assembly 20, and one controller. The suspension system 100 has a high integration degree, occupies a small space in the entire vehicle, and is easy to arrange.

According to the suspension system 100 of the embodiment of the present disclosure, the valve block 1 has a main flow path 11 and a plurality of branch flow paths 12. Each branch flow path 12 is provided with a first solenoid valve 21, and each branch flow path 12 is connected to a corresponding shock absorber 30. The controller can control whether each shock absorber 30 is connected to the main flow path 11 by adjusting the opening and closing of the first solenoid valve 21 on the branch flow path 12, so as to control the posture of the suspension system 100. The integrated valve 10 has a high integration degree and occupies a small space, which is conducive to realizing the miniaturization and integration of the integrated valve 10, thereby helping to improve the space utilization rate of the entire vehicle and reduce the weight of the entire vehicle.

Referring to FIG. 4, the pump assembly 20 includes an oil pump 201 and a liquid storage tank 202. The oil pump 201 pumps the oil in the liquid storage tank 202 into the main flow path 11. By controlling the opening and closing of the first solenoid valve 21 on each branch flow path 12, the extension and retraction of the shock absorber 30 corresponding to the branch flow path 12 can be controlled accordingly.

Referring to FIG. 4, the pump assembly 20 further includes a check valve 203 and a return valve 204. The check valve 203 can be connected between the oil pump 201 and the main flow path 11, and the conduction direction of the check valve 203 is from the oil pump 201 to the main flow path 11. The return valve 204 can be connected in parallel with the check valve 203, and the oil in the main flow path 11 can flow back to the liquid storage tank 202 through the return valve 204.

Referring to FIG. 4, the pump assembly 20 further includes a pump damper 205. The pump damper 205 is connected between the oil pump 201 and the check valve 203, and can reduce the impact of oil pressure fluctuations on the oil pump 201, so as to prolong the service life of the oil pump 201.

It should be noted that the shock absorber 30 may include a housing: one end of the housing of the shock absorber 30 is connected to the wheel axle, and the other end is connected to the vehicle frame. The branch flow path 12 corresponding to the shock absorber 30 may have a single-channel structure or a dual-channel structure. When the branch flow path 12 corresponding to the shock absorber 30 has a single-channel structure, the branch flow path 12 can be connected to the upper chamber or the lower chamber of the working cavity of the shock absorber 30; when it has a dual-channel structure, the two channels of the branch flow path 12 can be respectively connected to the upper chamber and the lower chamber of the working cavity of the shock absorber 30.

In some embodiments of the present disclosure, referring to FIG. 4, the suspension system 100 further includes an accumulator 40. The accumulator 40 is connected to the main flow path 11 through the accumulator flow path 14 in the valve block 1, and the pump assembly 20 can pump oil into the accumulator 40 through the main flow path 11 and the accumulator flow path 14 to enable the accumulator 40 to store energy. When the shock absorber 30 needs to be extended, the pump assembly 20 and the accumulator 40 can simultaneously deliver oil to the main flow path 11. The accumulator 40 can reduce the power of the pump assembly 20, reduce the operating noise of the pump assembly 20, and prolong the service life of the pump assembly 20. Meanwhile, when a large number of shock absorbers 30 need to be raised, the load of the main flow path 11 requires a large flow rate, and the accumulator 40 can discharge oil to supplement the flow rate of the pump assembly 20.

In some embodiments of the present disclosure, the plurality of shock absorbers 30 include four shock absorbers, the plurality of branch flow paths 12 include four branch flow paths, and the controller controls the first solenoid valve 21 to enable the shock absorbers 30 to adjust the vehicle body height.

Referring to FIG. 4, the four shock absorbers 30 are respectively: an FR shock absorber 30a, an FL shock absorber 30b, an RR shock absorber 30c, and an RL shock absorber 30d; the four branch flow paths 12 are respectively: an FR branch flow path 12a, an FL branch flow path 12b, an RR branch flow path 12c, and an RL branch flow path 12d. The FR branch flow path 12a connects the main flow path 11 and the FR shock absorber 30a, the FL branch flow path 12b connects the main flow path 11 and the FL shock absorber 30b, the RR branch flow path 12c connects the main flow path 11 and the RR shock absorber 30c, and the RL branch flow path 12d connects the main flow path 11 and the RL shock absorber 30d. The four branch flow paths are correspondingly provided with four first solenoid valves 21, which are respectively: an FR solenoid valve 21a, an FL solenoid valve 21b, an RR solenoid valve 21c, and an RL solenoid valve 21d. The FR solenoid valve 21a is provided on the FR branch flow path 12a and used to control the flow area of the FR branch flow path 12a; the FL solenoid valve 21b is provided on the FL branch flow path 12b and used to control the flow area of the FL branch flow path 12b; the RR solenoid valve 21c is provided on the RR branch flow path 12c and used to control the flow area of the FR branch flow path 12a(RR branch flow path 12c); the RL solenoid valve 21d is provided on the RL branch flow path 12d and used to control the flow area of the FR branch flow path 12a(RL branch flow path 12d).

It should be noted that the controller can adjust the posture of one or more of the FR shock absorber 30a, FL shock absorber 30b, RR shock absorber 30c, and RL shock absorber 30d to improve the adjustment efficiency of the suspension system 100. That is to say, when the controller needs to control the posture of any one or more shock absorbers 30, it can control the opening of the first solenoid valve 21 on the corresponding branch flow path 12, so that the shock absorber 30 whose posture needs to be adjusted is connected to the main flow path 11.

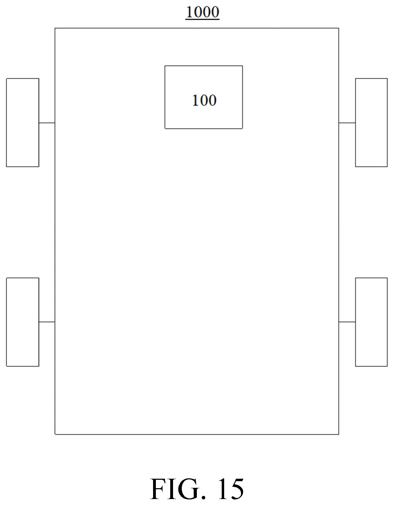

Referring to FIG. 15, a vehicle 1000 according to an embodiment of a further aspect of the present disclosure includes the integrated valve 10 for the suspension system 100 or the suspension system 100 of the above embodiments.

According to the vehicle 1000 of the embodiment of the present disclosure, the valve block 1 has a main flow path 11 and a plurality of branch flow paths 12. Each branch flow path 12 is provided with a first solenoid valve 21, and each branch flow path 12 is connected to a corresponding shock absorber 30. The controller can control whether each shock absorber 30 is connected to the main flow path 11 by adjusting the opening and closing of the first solenoid valve 21 on the branch flow path 12, so as to control the posture of the suspension system 100. The integrated valve 10 has a high integration degree and occupies a small space, which is conducive to realizing the miniaturization and integration of the integrated valve 10, thereby helping to improve the space utilization rate of the entire vehicle and reduce the weight of the entire vehicle.

In some embodiments of the present disclosure, referring to FIG. 1, FIG. 3, and FIG. 14, a vehicle frame connecting plate 200 is fixedly arranged on the vehicle frame of the vehicle 1000; the vehicle frame connecting plate 200 can be welded and fixed to the vehicle frame. The integrated valve 10 is detachably connected to the vehicle frame connecting plate 200 to facilitate the installation and maintenance of the integrated valve 10. The integrated valve 10 can be connected to the vehicle frame connecting plate 200 through a plurality of vehicle frame connection assemblies 3. Among them, the vibration damping sleeve 31 can abut against the valve block 1 and the vehicle frame connecting plate 200; one end of the connecting member 32 is in threaded fit with the vibration damping sleeve 31, and the vehicle frame connecting part 321 at the other end of the connecting member 32 can pass through the clamping groove on the vehicle frame connecting plate 200 and then be matched with a nut, so as to fix the integrated valve 10 on the vehicle frame.

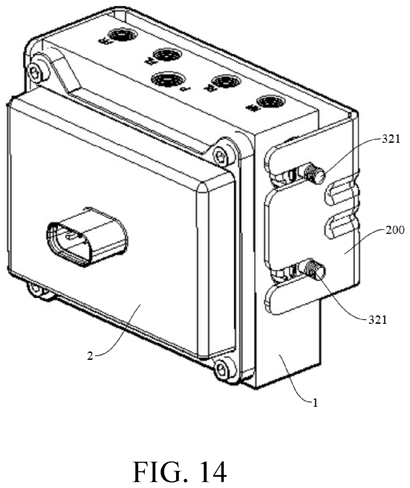

Referring to FIG. 14, the vehicle frame connecting plate 200 includes a first plate body, a second plate body, and a third plate body. The second plate body and the third plate body are connected to both ends of the first plate body and are arranged opposite to each other. Both the second plate body and the third plate body can be provided with clamping grooves adapted to cooperate with the connecting member 32. The vehicle frame connecting plate 200 may be a bracket with a "U"-shaped structure, and the vehicle frame connecting plate 200 is formed with a mounting groove adapted to accommodate the valve block 1.

In some embodiments of the present disclosure, the integrated valve 10 is arranged adjacent to the middle position of the four wheels, so that the length of the oil path between the integrated valve 10 and each shock absorber 30 on the wheels is basically the same. Thus, when adjusting the posture of the suspension system 100, the response speed of each shock absorber 30 is basically consistent, improving the stability and reliability of the vehicle.

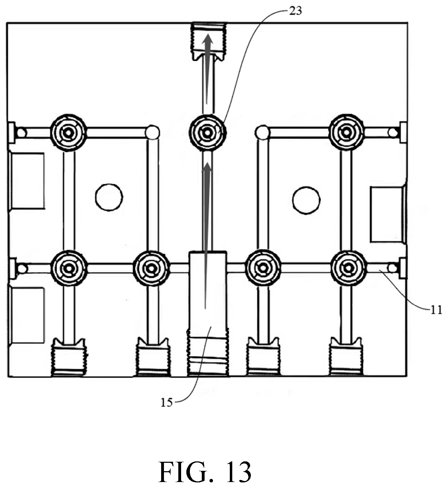

Referring to FIG. 1 to FIG. 14, a valve block 1 for a suspension system according to an embodiment of yet another aspect of the present disclosure is provided. A main flow path 11 and a plurality of branch flow paths 12 are arranged in the valve block 1. The first ends of the plurality of branch flow paths 12 are all connected to the first end of the main flow path 11, the second end of the main flow path 11 is adapted to be connected to a pump assembly 20, and the second end of each branch flow path 12 is adapted to be connected to a shock absorber 30.

According to the valve block 1 for the suspension system 100 of the embodiment of the present disclosure, the valve block 1 has a main flow path 11 and a plurality of branch flow paths 12. Each branch flow path 12 is connected to a corresponding shock absorber 30. The pump assembly 20 of the suspension system 100 can adjust the expansion and contraction of the shock absorber 30 through the valve block 1 to control the posture of the suspension system 100. The valve block 1 has a high integration degree and occupies a small space, which is conducive to realizing the miniaturization and integration of the valve block 1, thereby helping to improve the space utilization rate of the entire vehicle and reduce the weight of the entire vehicle.

In some embodiments of the present disclosure, referring to FIG. 4, the valve block 1 is further provided with at least one communication flow path 13. Both ends of the communication flow path 13 are respectively connected to two branch flow paths 12. The communication flow path 13 can connect the two branch flow paths 12 to which it is connected, so that the shock absorbers 30 corresponding to these two branch flow paths 12 can quickly establish pressure balance, thereby maintaining the vehicle posture balance and the stable state of the vehicle.

In some embodiments of the present disclosure, referring to FIG. 1 to FIG. 9, each branch flow path 12 has a first flow section 121 and a second flow section 122. One end of the first flow section 121 is configured to be the second end of the branch flow path 12, the other end of the first flow section 121 is connected to one end of the second flow section 122, and the other end of the second flow section 122 is configured to be the first end of the branch flow path 12. The first flow sections 121 of the two branch flow paths 12 are connected through the communication flow path 13. The axis of the first flow section 121, the axis of the second flow section 122, and the axis of the main flow path 11 are perpendicular to each other, and the projections of the first flow section 121 and the main flow path 11 on a plane perpendicular to the axis of the main flow path 11 do not overlap. This facilitates the processing and manufacturing of the valve block 1, makes full use of the space inside the valve block 1, and improves the integration degree of the valve block 1.

In some embodiments of the present disclosure, referring to FIG. 1 to FIG. 9, the communication flow path 13 includes: a third flow section 131, a fourth flow section 132, and a fifth flow section 133. Both ends of the fourth flow section 132 are respectively connected to the first end of the third flow section 131 and the first end of the fifth flow section 133. The second end of the third flow section 131 and the second end of the fifth flow section 133 are respectively connected to the two branch flow paths 12, and the second end of the third flow section 131 and the second end of the fifth flow section 133 are configured to be the two ends of the communication flow path 13. Among them, the second end of the third flow section 131 is coaxially connected to the first flow section 121 to which it is connected. It will be understood that in the first direction, both the third flow section 131 and the first flow section 121 are located on the same side of the main flow path 11; the third flow section 131 and the first flow section 121 of its corresponding branch flow path 12 may be at the same height; and both the third flow section 131 and the first flow section 121 of its corresponding branch flow path 12 may extend along the third direction. That is to say, when manufacturing the valve block 1, a drilling tool can drill along the third direction to form the third flow section 131 and the first flow section 121 of its corresponding branch flow path 12 at the same time, which helps reduce the processing difficulty of the valve block 1, simplify the drilling process, and improve the processing efficiency and manufacturability of the valve block 1.

In some embodiments of the present disclosure, referring to FIG. 1 to FIG. 9, the axis of the fourth flow section 132 is parallel to the axis of the second flow section 122, and the opening at the end of the fourth flow section 132 away from the third flow section 131 is provided on the first side surface of the valve block 1. The opening at the end of the second flow section 122 away from the first flow section 121 is provided on the first side surface of the valve block 1. Thus, the first solenoid valve 21 can be inserted into the second flow section 122 through the opening at the end of the second flow section 122 away from the first flow section 121, and the second solenoid valve 22 can be inserted into the fourth flow section 132 through the opening at the end of the fourth flow section 132 away from the third flow section 131. The mounting openings for the first solenoid valve 21 and the second solenoid valve 22 are all provided on the same side surface of the valve block 1, which facilitates the installation of the first solenoid valve 21 and the second solenoid valve 22.

In some embodiments of the present disclosure, referring to FIG. 1 to FIG. 9, the fifth flow section 133 includes: a first sub-flow section 1331, a second sub-flow section 1332, and a third sub-flow section 1333. Both ends of the second sub-flow section 1332 are respectively connected to the first end of the first sub-flow section 1331 and the first end of the third sub-flow section 1333. The second end of the first sub-flow section 1331 is connected to the fourth flow section 132. The axis of the first sub-flow section 1331 is parallel to the axis of the main flow path 11, the axis of the second sub-flow section 1332 is parallel to the axis of the second flow section 122, and the third sub-flow section 1333 is coaxially connected to the first flow section 121 of the branch flow path 12 to which it is connected. By arranging the positions and relative relationships of the various flow paths in the valve block 1, the flow paths in the valve block 1 are distributed uniformly, facilitating the processing and manufacturing of each flow path.

In some embodiments of the present disclosure, referring to FIG. 1 to FIG. 9, the valve block 1 is further provided with an accumulator flow path 14 connected to the main flow path 11. The accumulator flow path 14 is adapted to be connected to the accumulator 40, and is provided with a third solenoid valve 23. When the accumulator 40 stores and releases energy, the pump assembly 20 can pump oil into the accumulator 40 through the main flow path 11 and the accumulator flow path 14 to enable the accumulator 40 to store energy. When the shock absorber 30 needs to be extended, the pump assembly 20 and the accumulator 40 can simultaneously deliver oil to the main flow path 11. The accumulator 40 can reduce the power of the pump assembly 20, reduce the operating noise of the pump assembly 20, and prolong the service life of the pump assembly 20. Meanwhile, when a large number of shock absorbers 30 need to be raised, the load of the main flow path 11 requires a large flow rate, and the accumulator 40 can discharge oil to supplement the flow rate of the pump assembly 20.

In some embodiments of the present disclosure, referring to FIG. 1 to FIG. 9, the accumulator flow path 14 includes: a sixth flow section 141, a seventh flow section 142, and an eighth flow section 143. Both ends of the seventh flow section 142 are respectively connected to the sixth flow section 141 and the eighth flow section 143. The sixth flow section 141 is connected to the main flow path 11. The axis of the sixth flow section 141 and the axis of the eighth flow section 143 are perpendicular to the axis of the main flow path 11, and the axis of the seventh flow section 142 is perpendicular to both the axis of the sixth flow section 141 and the axis of the main flow path 11. The opening at the end of the seventh flow section 142 away from the eighth flow section 143 is provided on the first side surface of the valve block 1. That is to say, the axis of the sixth flow section 141 is perpendicular to the axis of the main flow path 11, the axis of the eighth flow section 143 is perpendicular to the axis of the main flow path 11, and the axis of the seventh flow section 142, the axis of the sixth flow section 141, and the axis of the main flow path 11 are perpendicular to each other pairwise. In other words, the seventh flow section 142 extends along the first direction, both the sixth flow section 141 and the eighth flow section 143 extend along the third direction, and the sixth flow section 141 and the eighth flow section 143 may be offset in the first direction. The third solenoid valve 23 on the seventh flow section 142 can be used to control the on-off of the seventh flow section 142. The sixth flow section 141, seventh flow section 142, and eighth flow section 143 of the accumulator flow path 14 can all be formed by drilling tools on a solid plate. The seventh flow section 142 is formed with a third solenoid valve mounting opening on the first side surface of the valve block 1, which is adapted to mount the third solenoid valve 23. The eighth flow section 143 is formed with an accumulator connection port 16f on the rear side surface of the valve block 1, which is adapted to be connected to the accumulator 40; the accumulator connection port 16f may be a threaded hole to facilitate the connection of hydraulic pipelines.

In some embodiments of the present disclosure, referring to FIG. 1 to FIG. 9, the valve block 1 has an inlet flow path 15. The inlet flow path 15 is connected to the main flow path 11 and is coaxially connected to the sixth flow section 141. The inlet flow path 15 can extend along the third direction, and is opposite to and connected with the sixth flow section 141. The inlet flow path 15 can be formed by a drilling tool on a solid plate. The inlet flow path 15 is formed with a pump assembly connection port 16e on the front side surface of the valve block 1, which is adapted to be connected to the pump assembly 20; the pump assembly connection port 16e may be a threaded hole to facilitate the connection of hydraulic pipelines. During the drilling process of the inlet flow path 15 and the sixth flow section 141, the drilling tool can drill from the same position, improving the integrity and integration degree of the valve block 1.

In the description of this specification, references to terms such as "one embodiment", "some embodiments", "example", "specific example", or "some examples" mean that specific features, structures, materials, or characteristics described in conjunction with the embodiment or example are included in at least one embodiment or example of the present disclosure. In this specification, the schematic expressions of the above terms are not necessarily directed to the same embodiment or example. Moreover, the described specific features, structures, materials, or characteristics can be combined in any suitable manner in any one or more embodiments or examples. In addition, those skilled in the art can join and combine the different embodiments or examples described in this specification.

Although the embodiments of the present disclosure have been shown and described above, it will be understood that the above embodiments are exemplary and shall not be construed as limiting the present disclosure. Those of ordinary skill in the art can make changes, modifications, substitutions, and variations to the above embodiments within the scope of the present disclosure.

## Claims

1. An integrated valve for a suspension system, comprising:
a valve block (1), wherein a main flow path (11) and a plurality of branch flow paths (12) are arranged in the valve block (1); first ends of the plurality of branch flow paths (12) are all connected to a first end of the main flow path (11); a second end of the main flow path (11) is adapted to be connected to a pump assembly (20); and a second end of each branch flow path (12) is adapted to be connected to a shock absorber (30); and
a control valve assembly (2), the control valve assembly (2) comprises a plurality of first solenoid valves (21), and at least one first solenoid valve (21) is arranged on branch flow paths (12).

2. The integrated valve for a suspension system according to claim 1, wherein the control valve assembly (2) further comprises:
at least one second solenoid valve (22); the valve block (1) is further provided with at least one communication flow path (13); both ends of the communication flow path (13) are respectively connected to two of the branch flow paths (12); and the second solenoid valve (22) is arranged on the communication flow path (13).

3. The integrated valve for a suspension system according to claim 2, wherein each of the branch flow paths (12) has a first flow section (121) and a second flow section (122); one end of the first flow section (121) is configured to be the second end of the branch flow path (12); the other end of the first flow section (121) is connected to one end of the second flow section (122); and the other end of the second flow section (122) is configured to be the first end of the branch flow path (12);
the first solenoid valve (21) is arranged on the second flow section (122);
the first flow sections (121) of the two branch flow paths (12) are connected through the communication flow path (13).

4. The integrated valve for a suspension system according to claim 3, wherein an axis of the first flow section (121), an axis of the second flow section (122), and an axis of the main flow path (11) are perpendicular to each other; and projections of the first flow section (121) and the main flow path (11) on a plane perpendicular to the axis of the main flow path (11) do not overlap.

5. The integrated valve for a suspension system according to claim 3 or 4, wherein the communication flow path (13) comprises: a third flow section (131), a fourth flow section (132), and a fifth flow section (133); both ends of the fourth flow section (132) are respectively connected to a first end of the third flow section (131) and a first end of the fifth flow section (133); a second end of the third flow section (131) and a second end of the fifth flow section (133) are respectively connected to the two branch flow paths (12); the second end of the third flow section (131) and the second end of the fifth flow section (133) are configured to be the two ends of the communication flow path (13); and the second solenoid valve (22) is arranged on the fourth flow section (132);
the second end of the third flow section (131) is coaxially connected to the first flow section (121) to which it is connected.

6. The integrated valve for a suspension system according to claim 5, wherein an axis of the fourth flow section (132) is parallel to the axis of the second flow section (122); the opening at the end of the fourth flow section (132) away from the third flow section (131) is provided on a first side surface of the valve block (1); and the opening at the end of the second flow section (122) away from the first flow section (121) is provided on the first side surface of the valve block (1).

7. The integrated valve for a suspension system according to claim 5 or 6, wherein the fifth flow section (133) comprises: a first sub-flow section (1331), a second sub-flow section (1332), and a third sub-flow section (1333); both ends of the second sub-flow section (1332) are respectively connected to a first end of the first sub-flow section (1331) and a first end of the third sub-flow section (1333); a second end of the first sub-flow section (1331) is connected to the fourth flow section (132); an axis of the first sub-flow section (1331) is parallel to the axis of the main flow path (11); an axis of the second sub-flow section (1332) is parallel to the axis of the second flow section (122); and the third sub-flow section (1333) is coaxially connected to the first flow section (121) of the branch flow path (12) to which it is connected.

8. The integrated valve for a suspension system according to any one of claims 1 to 7, wherein the control valve assembly (2) further comprises a third solenoid valve (23); the valve block (1) is further provided with an accumulator flow path (14) connected to the main flow path (11); the accumulator flow path (14) is adapted to be connected to an accumulator (40); and the third solenoid valve (23) is arranged on the accumulator flow path (14).

9. The integrated valve for a suspension system according to claim 8, wherein the accumulator flow path (14) comprises: a sixth flow section (141), a seventh flow section (142), and an eighth flow section (143); both ends of the seventh flow section (142) are respectively connected to the sixth flow section (141) and the eighth flow section (143); the sixth flow section (141) is connected to the main flow path (11); the third solenoid valve (23) is arranged on the seventh flow section (142); an axis of the sixth flow section (141) and an axis of the eighth flow section (143) are perpendicular to the axis of the main flow path (11); and an axis of the seventh flow section (142) is perpendicular to both the axis of the sixth flow section (141) and the axis of the main flow path (11);
the opening at the end of the seventh flow section (142) away from the eighth flow section (143) is provided on the first side surface of the valve block (1).

10. The integrated valve for a suspension system according to claim 9, wherein the valve block (1) has an inlet flow path (15); the inlet flow path (15) is connected to the main flow path (11); and the inlet flow path (15) is coaxially connected to the sixth flow section (141).

11. The integrated valve for a suspension system according to any one of claims 1 to 10, wherein the control valve assembly (2) comprises a cover plate (24); the cover plate (24) and the first side surface of the valve block (1) define an accommodating cavity; each first solenoid valve (21) comprises a first valve body (211) and a first coil (212); the first valve body (211) is partially disposed in the branch flow path (12); the first coil (212) is disposed on the first valve body (211); and each first coil (212) is accommodated in the accommodating cavity.

12. The integrated valve for a suspension system according to any one of claims 1 to 11, further comprising a connecting member (32); the valve block (1) is provided with a mounting hole (17); the connecting member (32) is disposed in the mounting hole (17); and a part of the connecting member (32) protrudes from the valve block (1).

13. The integrated valve for a suspension system according to claim 12, further comprising a vibration damping sleeve (31); the vibration damping sleeve (31) is sheathed on the connecting member (32) and mounted in the mounting hole (17).

14. The integrated valve for a suspension system according to claim 13, wherein the vibration damping sleeve (31) is in an interference fit with the mounting hole (17).

15. The integrated valve for a suspension system according to claim 13 or 14, wherein an outer circumferential surface of the vibration damping sleeve (31) is provided with a plurality of protrusions spaced apart.

16. The integrated valve for a suspension system according to claim 15, wherein the plurality of protrusions are evenly spaced along a circumferential direction of the vibration damping sleeve (31).

17. A suspension system, comprising:
an integrated valve, which is the integrated valve for a suspension system according to any one of claims 1 to 16;
a plurality of shock absorbers (30), the plurality of shock absorbers (30) being connected in one-to-one correspondence with the plurality of branch flow paths (12); and
a pump assembly (20), the pump assembly (20) being connected to the main flow path (11).

18. The suspension system according to claim 17, further comprising an accumulator (40); the accumulator (40) is connected to the main flow path (11) through the accumulator flow path (14) in the valve block (1).

19. The suspension system according to claim 17 or 18, wherein the plurality of shock absorbers (30) comprise four shock absorbers (30); the plurality of branch flow paths (12) comprise four branch flow paths (12); and the controller controls the first solenoid valve (21) to enable the shock absorbers (30) to adjust the vehicle body height.

20. A vehicle, comprising the integrated valve for a suspension system according to any one of claims 1 to 16 or the suspension system according to any one of claims 17 to 19.

21. The vehicle according to claim 20, wherein a vehicle frame connecting plate (200) is fixedly arranged on a vehicle frame of the vehicle; and the integrated valve is detachably connected to the vehicle frame connecting plate (200).

22. The vehicle according to claim 20 or 21, wherein the integrated valve is arranged adjacent to a middle position of the four wheels.

23. A valve block for a suspension system, wherein a main flow path (11) and a plurality of branch flow paths (12) are arranged in the valve block (1); first ends of the plurality of branch flow paths (12) are all connected to a first end of the main flow path (11); a second end of the main flow path (11) is adapted to be connected to a pump assembly (20); and a second end of each branch flow path (12) is adapted to be connected to a shock absorber (30).

24. The valve block for a suspension system according to claim 23, wherein the valve block (1) is further provided with at least one communication flow path (13); both ends of the communication flow path (13) are respectively connected to two of the branch flow paths (12).

25. The valve block for a suspension system according to claim 24, wherein each of the branch flow paths (12) has a first flow section (121) and a second flow section (122); one end of the first flow section (121) is configured to be the second end of the branch flow path (12); the other end of the first flow section (121) is connected to one end of the second flow section (122); and the other end of the second flow section (122) is configured to be a first end of the branch flow path (12);
first flow sections (121) of the two branch flow paths (12) are connected through the communication flow path (13);
an axis of the first flow section (121), an axis of the second flow section (122), and an axis of the main flow path (11) are perpendicular to each other; and projections of the first flow section (121) and the main flow path (11) on a plane perpendicular to the axis of the main flow path (11) do not overlap.

26. The valve block for a suspension system according to claim 25, wherein the communication flow path (13) comprises: a third flow section (131), a fourth flow section (132), and a fifth flow section (133); both ends of the fourth flow section (132) are respectively connected to a first end of the third flow section (131) and a first end of the fifth flow section (133); a second end of the third flow section (131) and a second end of the fifth flow section (133) are respectively connected to the two branch flow paths (12); and the second end of the third flow section (131) and the second end of the fifth flow section (133) are configured to be the two ends of the communication flow path (13);
the second end of the third flow section (131) is coaxially connected to the first flow section (121) to which it is connected.

27. The valve block for a suspension system according to claim 26, wherein an axis of the fourth flow section (132) is parallel to the axis of the second flow section (122); the opening at the end of the fourth flow section (132) away from the third flow section (131) is provided on a first side surface of the valve block (1); and the opening at the end of the second flow section (122) away from the first flow section (121) is provided on the first side surface of the valve block (1).

28. The valve block for a suspension system according to claim 26 or 27, wherein the fifth flow section (133) comprises: a first sub-flow section (1331), a second sub-flow section (1332), and a third sub-flow section (1333); both ends of the second sub-flow section (1332) are respectively connected to a first end of the first sub-flow section (1331) and a first end of the third sub-flow section (1333); a second end of the first sub-flow section (1331) is connected to the fourth flow section (132); an axis of the first sub-flow section (1331) is parallel to the axis of the main flow path (11); an axis of the second sub-flow section (1332) is parallel to the axis of the second flow section (122); and the third sub-flow section (1333) is coaxially connected to the first flow section (121) of the branch flow path (12) to which it is connected.

29. The valve block for a suspension system according to any one of claims 23 to 28, wherein the valve block (1) is further provided with an accumulator flow path (14) connected to the main flow path (11); the accumulator flow path (14) is adapted to be connected to an accumulator (40).

30. The valve block for a suspension system according to claim 29, wherein the accumulator flow path (14) comprises: a sixth flow section (141), a seventh flow section (142), and an eighth flow section (143); both ends of the seventh flow section (142) are respectively connected to the sixth flow section (141) and the eighth flow section (143); the sixth flow section (141) is connected to the main flow path (11); an axis of the sixth flow section (141) and an axis of the eighth flow section (143) are perpendicular to the axis of the main flow path (11); and an axis of the seventh flow section (142) is perpendicular to both the axis of the sixth flow section (141) and the axis of the main flow path (11);
the opening at the end of the seventh flow section (142) away from the eighth flow section (143) is provided on the first side surface of the valve block (1).

31. The valve block for a suspension system according to claim 30, wherein the valve block (1) has an inlet flow path (15); the inlet flow path (15) is connected to the main flow path (11); and the inlet flow path (15) is coaxially connected to the sixth flow section (141).
